Europäisches Patentamt

European Patent Office

Office européen des brevets

(11) Numéro de publication : **0 145 098**
**B1**

# (12) FASCICULE DE BREVET EUROPÉEN

(45) Date de publication du fascicule du brevet :
28.09.88

(21) Numéro de dépôt : **84201805.3**

(22) Date de dépôt : **05.12.84**

(51) Int. Cl.⁴ : **H 04 Q  7/04, H 04 B  7/26**

(54) Procédé de radiocommunication bidirectionnelle entre des stations fixes et des stations mobiles.

(30) Priorité : 09.12.83 FR 8319749

(43) Date de publication de la demande :
19.06.85 Bulletin 85/25

(45) Mention de la délivrance du brevet :
28.09.88 Bulletin 88/39

(84) Etats contractants désignés :
**BE CH DE FR GB IT LI NL SE**

(56) Documents cités :
**EP-A- 0 036 146**
**DE-A- 2 537 683**
**DE-A- 2 625 475**
**DE-A- 2 634 080**
**DE-B- 2 659 569**
**FR-A- 2 376 570**
**US-A- 3 906 166**
**COMMUTATION & TRANSMISSION, vol. 3, no. 3, septembre 1981, pages 13-26, Issy-Les-Moulineaux, FR; M. MALLET et al.: "Faisceau hertzien FHM 914 a multiplex numérique intégré dans la bande 790 A 960 MHz"**

(73) Titulaire : **TELECOMMUNICATIONS RADIOELECTRI-QUES ET TELEPHONIQUES T.R.T.**
**88, rue Brillat Savarin**
**F-75013 Paris (FR)**
**FR**
**N.V. Philips' Gloeilampenfabrieken**
**Groenewoudseweg 1**
**NL-5621 BA Eindhoven (NL)**
**BE CH DE GB IT LI NL SE**

(72) Inventeur : **Alexis, Roger Pierre J. SOCIETE CIVILE S.P.I.D.**
**209 rue de l'Université**
**F-75007 Paris (FR)**

(74) Mandataire : **Chaffraix, Jean et al**
**Société Civile S.P.I.D. 209, rue de l'Université**
**F-75007 Paris (FR)**

## Description

La présente invention concerne un procédé de radiocommunication bidirectionnelle entre des stations fixes et des stations mobiles utilisant d'une part un ensemble de canaux de communication dont une première partie constituant une voie descendante est affectée pour l'émission de toutes les stations fixes et dont une deuxième partie constituant une voie montante est affectée pour l'émission de toutes les stations mobiles, chaque partie de canaux de communication formée par un des canaux de communication de la voie montante et par un des canaux de communication de la voie descendante étant susceptible de transmettre une communication bidirectionnelle entre l'une quelconque des stations fixes et l'une quelconque des stations mobiles et d'autre part au moins un canal sémaphore qui est multiplexé avec les canaux de communication dans la voie descendante et dans lequel sont ménagés « n » espaces de temps affectés chacun à une station fixe faisant partie d'un groupe de « n » stations fixes pour que chacune des « n » stations puisse émettre un signal indicateur de puissance et pour que chaque station mobile puisse sélectionner une station fixe en comparant le niveau des signaux de puissance transmis dans les « n » espaces de temps.

D'une manière générale, l'invention est applicable aux deux procédés connus de radiocommunication du type à accès multiple à répartition dans le temps dit AMRT et du type à accès multiple à répartition de fréquence dit AMRF. Suivant la technique classique, ces procédés sont utilisés dans un réseau cellulaire, partagé géographiquement en des motifs de zones élémentaires, appelées cellules. Chaque motif comprend un nombre prédéterminé de cellules, par exemple égal à 7, 9, 12 ou 16 cellules. Les motifs sont réguliers et répartis périodiquement. Chaque cellule est généralement hexagonale et dispose en son centre d'une station fixe.

Selon le procédé de radiocommunication du type AMRF, par exemple celui décrit dans la demande de brevet français No 2 376 570, les moyens d'émission de la station fixe de chaque cellule sont des émetteurs à bande étroite en nombre égal au nombre maximal de stations mobiles pouvant communiquer avec la station fixe. Dans chaque motif, les bandes de fréquence allouées respectivement aux stations fixes sont différentes afin d'éviter les interférences mutuelles entre stations du motif. Chaque canal ayant une fréquence différente de celle de tous les autres canaux du motif dans lequel est incluse la station fixe est ainsi assigné à une communication entre une station fixe et une station mobile. Une allocation dynamique de fréquence peut être également prévue. Elle consiste à mettre certains canaux à la disposition de toutes les cellules ; quand une cellule utilise l'un de ces canaux, celui-ci ne peut être utilisé par les autres stations du même motif. Ceci est décrit dans la demande de brevet européen No 0 036 146.

On doit également citer la demande de brevet allemand No 2 537 683 qui décrit l'utilisation d'un canal sémaphore pour déterminer la station fixe à laquelle doivent se raccorder les stations mobiles.

Selon le procédé de radiocommunication du type AMRT, les émetteurs des stations fixes des cellules dans chaque motif sont des émetteurs à bande large. A chaque émetteur d'une station fixe sont alloués certains intervalles temporels d'une trame numérique en nombre égal au nombre maximal de stations mobiles pouvant communiquer avec la station fixe. Chaque communication entre la station fixe et une station mobile occupe ainsi un intervalle de temps de la trame qui est alloué pendant toute la communication. Une allocation dynamique temporelle de certains intervalles temporels peut également être prévue de façon analogue à l'allocation dynamique du type AMRF.

Enfin, il convient de signaler un procédé mixte de radiocommunication AMRT-AMRF qui consiste à allouer à chaque station fixe une bande de fréquence dans laquelle une trame numérique permet d'assurer les liaisons avec toutes les stations mobiles de la cellule. Toutefois, ce procédé ne sera pas considéré dans le cadre de la présente invention.

Les communications étant effectuées en mode duplex, c'est-à-dire bidirectionnel, on retrouve du côté des stations mobiles des moyens d'émission analogues respectivement pour les trois procédés décrits ci-dessus.

Selon les trois procédés, la répartition des stations fixes en motifs cellulaires est principalement nécessitée par le phénomène de brouillage qui interdit la réutilisation d'un canal radiotéléphonique assigné à une cellule par une cellule voisine. La faiblesse de ces trois procédés est une mauvaise utilisation du spectre de fréquence : si on a par exemple un motif d'ordre 7, chaque cellule n'utilise qu'un septième des fréquences disponibles. On peut bien augmenter la capacité du système en réduisant la taille des cellules, mais alors leur nombre augmente et le coût de l'infrastructure devient élevé.

La présente invention vise à remédier à cet inconvénient.

Pour cela, un procédé de radiocommunication bidirectionnelle entre des stations fixes et des stations mobiles du genre mentionné dans le préambule est remarquable en ce que :

a) chaque station fixe détecte les canaux dans la voie montante occupés par des communications entre des stations fixes et des stations mobiles situées dans une première zone de gêne de ladite station fixe pour laquelle le niveau de puissance reçu provenant desdites stations mobiles est supérieur à un premier seuil prédéterminé et mémorise les adresses des canaux détectés,

b) chaque station fixe émet en permanence au moyen du canal sémaphore assigné à la station fixe les adresses des canaux dans la voie montante occupés par des communications de stations mobiles situées dans la première zone de gêne de ladite station fixe,

c) pour établir une communication avec la station fixe sélectionnée, la station mobile détecte les canaux dans la voie descendante occupés par des communications entre des stations mobiles et des stations fixes situées dans une seconde zone de gêne de ladite station mobile pour laquelle le niveau de puissance reçu provenant desdites stations fixes est supérieur à un second seuil prédéterminé, et ladite station mobile mémorise les adresses des canaux détectés et sélectionne une paire de canaux de communication libres dont l'adresse est différente des adresses des canaux occupés détectés par ladite station mobile et des adresses de canaux occupés, transmises au moyen du canal sémaphore assigné à ladite station fixe sélectionnée.

Il en résulte que la notion de motif et notamment de répartition de fréquences ou d'intervalles de temps entre cellules n'est plus mise en œuvre selon l'invention, du moins en ce qui concerne l'acheminement des communications. Toutefois, cette notion de motif demeure conservée pour l'exploitation du canal sémaphore servant à la procédure d'établissement.

Ainsi grâce à l'invention, lorsque les conditions de propagation sont mauvaises, la portée est faible et l'on a ainsi une meilleure utilisation des canaux. Ceci est intéressant pour les zones urbanisées où le besoin de communications est très fort.

D'autres avantages et caractéristiques de l'invention apparaîtront plus clairement à la lecture de la description suivante en référence aux dessins annexés correspondants dans lesquels :

— la Fig. 1 montre les positions relatives de stations fixes et de stations mobiles ainsi que la zone à l'intérieur de laquelle une station fixe est gênante et la zone à l'intérieur de laquelle une station mobile est gênante ; et

— la Fig. 2 montre des trames de la première voie dite descendante et des trames de la seconde voie dite montante pour un procédé de radiocommunication du type AMRT selon l'invention.

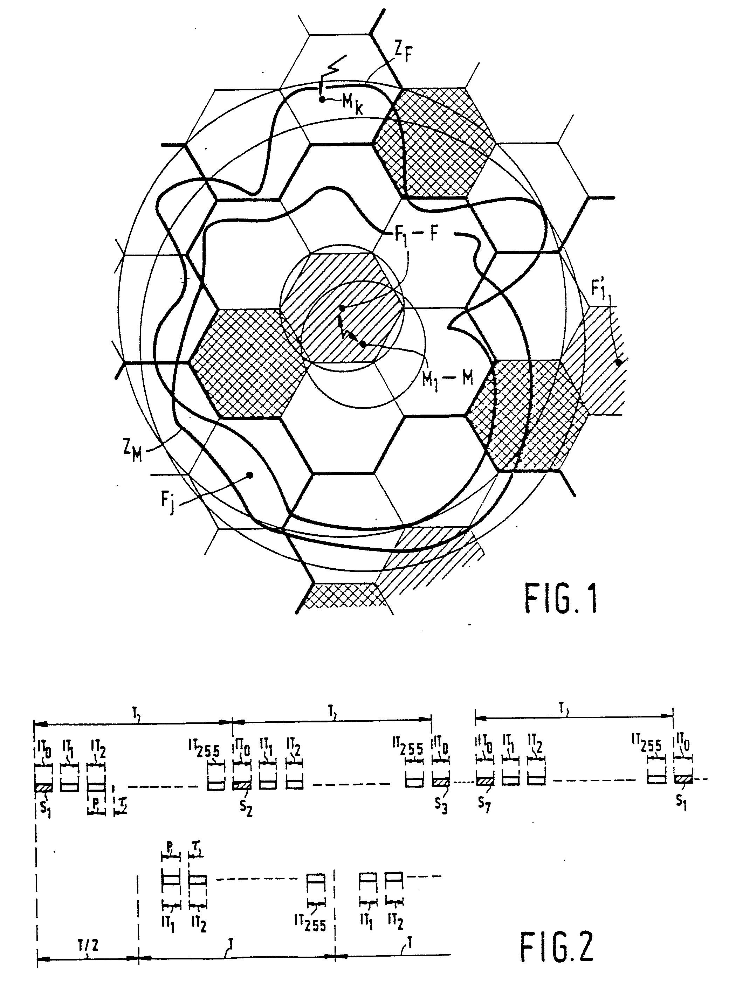

En référence à la Fig. 1 sont considérées une station fixe F et une station mobile M d'un système cellulaire de radiocommunication selon l'invention. Dans la suite, on se référera à un système du type à accès multiple à répartition dans le temps (AMRT). Chaque station fixe transmet vers des stations mobiles des messages dans des canaux alloués dynamiquement dans une première voie numérique multiplex dite descendante ; chaque station mobile transmet vers l'une des stations fixes un message dans un canal alloué dynamiquement dans une seconde voie numérique multiplex dite montante. Il est possible d'utiliser une diversité d'espace mais celle-ci n'est nécessaire qu'avec le système AMRF.

Il est possible de définir autour de toute station fixe F une zone $Z_F$ dite de gêne à l'intérieur de laquelle toute station mobile M est susceptible d'être gênée par la station F avec une puissance de réception supérieure à un premier seuil de puissance prédéterminé. Réciproquement, toute station mobile M se trouvant dans la zone $Z_F$ est susceptible de gêner la station F avec une puissance de réception supérieure à un second seuil de puissance prédéterminé.

Une zone de gêne $Z_M$ autour de la station mobile M est définie d'une manière analogue. Toute station fixe se trouvant dans la zone $Z_M$ est susceptible d'être gênée par la station mobile M, et la station mobile M est susceptible d'être gênée par toute station fixe se trouvant dans la zone $Z_M$.

Il est clair pour qu'une communication bidirectionnelle puisse s'établir entre les stations F et M, qu'il est nécessaire mais non suffisant que les stations F et M soient dans l'intersection $Z_F \Lambda$ $Z$ des zones $Z_F$ et $Z_M$. L'établissement d'une telle communication à travers deux canaux respectivement dans les voies descendante et montante engendre des perturbations auxquelles il convient de remédier. L'émission d'un message dans le canal de la voie descendante par la station fixe est susceptible de perturber au moins une station mobile $M_k$ incluse dans la zone $Z_F$ pouvant recevoir un message dans ledit canal émis par une autre station fixe. L'émission d'un message dans le canal de la voie montante par la station mobile M est susceptible de perturber au moins une station fixe $F_j$ incluse dans la zone $Z_M$ pouvant recevoir un message dans ledit canal émis par une autre station mobile. La communication à établir entre les stations F et M ne doit donc perturber ni les autres communications avec la station F selon les directions montante et descendante, ni les réceptions des stations fixes $F_j$ dans la zone $Z_M$, ni les réceptions des stations mobiles $M_k$ dans la zone $Z_F$.

Selon un aspect de l'invention, les perturbations sont supprimées, d'une part en associant pour chaque communication un canal prédéterminé de la voie montante à un canal prédéterminé de la voie descendante, comme pour une cellule selon la technique antérieure, et d'autre part, en satisfaisant les deux conditions suivantes :

1) Pendant une communication, au moins les deux stations fixe F et mobile M émettent en permanence des signaux de marquage de canal constitués par exemple par le maintien d'une onde porteuse non modulée afin que les deux canaux utilisés pour la communication ne soient pas sélectionnés pour une autre communication avec la station fixe F ;

2) Le rapport entre la puissance d'émission d'une station mobile et un premier seuil prédéterminé au récepteur de la station fixe est égal au rapport entre la puissance d'émission d'une station fixe et un second seuil prédéterminé au récepteur de la station mobile. Dans ces conditions, les portées dans le sens station fixe vers station mobile et dans le sens station mobile vers station fixe sont égales.

Afin que la station mobile M puisse choisir la station fixe la mieux reçue, des signaux périodiques, servant également à la synchronisation de la trame des mobiles dans les systèmes AMRF, sont émis en permanence par les stations fixes dans un canal de la voie descendante dit canal sémaphore. Dans le canal sémaphore sont multiplexés des intervalles de temps provenant des diverses stations fixes suivant un motif d'ordre 7, 9, 12 ou 16 de façon à éviter toute interférence. La station mobile M choisit ainsi elle-même la station fixe pour laquelle la puissance de réception est la plus élevée.

La station mobile M reconnaît les canaux de la voie descendante occupés par des communications avec des stations fixes $F_j$ situées dans la zone $Z_M$ et mémorise les adresses de ces canaux occupés.

La station mobile M est incapable de connaître les canaux de la voie montante occupés par des stations mobiles $M_k$ situées dans la zone d'intersection $Z_F \wedge Z_M$, où $\bar{Z}_M$ désigne la zone complémentaire de la zone $Z_M$. Afin que la station mobile M puisse choisir une paire de canaux non occupés, la station fixe F transmet dans les intervalles de temps du canal sémaphore assignés à ladite station fixe, la liste des adresses des canaux occupés par des stations mobiles, telles que la station $M_k$, situées dans la zone $Z_F$. Dans ces conditions, la station mobile M, après avoir sélectionné la station F par comparaison des puissances reçues dans les divers intervalles de temps du canal sémaphore, est capable de sélectionner une paire de canaux non occupés pour établir la liaison duplex avec la station fixe F, et donc appeler un abonné demandé à travers la station F.

Un problème analogue est également à résoudre lorsque la station fixe F doit appeler une station mobile, telle que la station M qui lui est rattachée au moment de l'appel.

La station fixe F connaît les canaux de la voie montante occupés par des communications avec les stations mobiles situés dans la zone $Z_F$ et mémorise les adresses de ces canaux occupés.

La station fixe F est incapable de connaître les canaux de la voie descendante occupés par des communications avec des stations fixes $F_j$ situées dans la zone d'intersection $\bar{Z}_F \wedge Z_M$, où $\bar{Z}_F$ désigne la zone complémentaire de la zone $Z_F$. Le choix d'emblée par la station fixe F d'un canal de la voie descendante, et donc d'une paire de canaux de la voie montante et de la voie descendante, est par conséquent impossible.

Selon un autre aspect de l'invention, pour appeler la station mobile M, la station fixe F transmet l'adresse de la station mobile M à appeler dans l'intervalle de temps du canal sémaphore assigné à la station fixe dans la voie descendante. La station mobile M est alors en mesure de choisir une paire de canaux non occupés au moyen de la procédure d'appel par la station mobile décrite ci-dessus, en réponse à la détection de l'adresse de la station mobile et en fonction des adresses des canaux occupés transmis dans l'intervalle de temps du canal sémaphore assigné à la station fixe F et des adresses des canaux occupés mémorisées directement par la station mobile.

Si par suite du déplacement de la station mobile M, les signaux reçus par la station M et provenant de la station F sont brouillés par des signaux émis par une autre station fixe $F_j$ dans le même canal de la voie descendante, la station mobile recherche une nouvelle paire de canaux libres. L'affectation de la communication en cours à une nouvelle paire de canaux est automatiquement signalée dans l'en-tête du message.

De façon analogue, si par suite du déplacement d'une station mobile $M_k$ dans la zone $Z_F$, les signaux reçus par la station F et provenant de la station M sont brouillés par des signaux émis par la station $M_k$ dans le même canal de la voie montante, la station fixe F signale ce brouillage à la station mobile M. Un tel brouillage est indiqué par exemple par un bit prédéterminé inclus dans l'en-tête du message dans le canal de la voie descendante, lequel invite la station mobile M à changer de paire de canaux selon la procédure décrite ci-dessus.

Si par suite du déplacement de la station mobile M, l'analyse des signaux dans les divers intervalles temporels du canal sémaphore indique que la puissance reçue à partir d'une autre station fixe est plus élevée d'une quantité appréciable, typiquement de 10 dB, que la puissance reçue à partir de la station fixe F, la station mobile M doit changer de canal. Pour cela, la station mobile M procède à la sélection d'une paire de canaux en fonction des adresses de canaux occupés transmises en permanence dans l'intervalle de temps du canal sémaphore assigné à l'autre station fixe, comme pour un appel par la station mobile. La station mobile M signale son changement de station fixe de rattachement en modifiant une partie de l'en-tête du dernier intervalle de temps transmis à la première station fixe, puis en modifiant une partie de l'en-tête du premier intervalle de temps transmis à la nouvelle station fixe. Les modifications peuvent consister à insérer respectivement dans les en-têtes les adresses de la première station fixe et de la nouvelle station fixe.

A titre d'exemple, on suppose que les stations fixes sont distribuées dans un réseau cellulaire à motif régulier périodique. Chaque motif comprend m = 7 cellules hexagonales contenant chacune une station fixe, comme montré à la Fig. 1. Chaque station fixe est sensiblement au centre d'une cellule hexagonale. Comme déjà dit, toutes les stations fixes du système émettent dans une voie descendante ayant une première fréquence porteuse prédéterminée et toutes les stations mobiles du système émettent dans une voie montante ayant une seconde fréquence porteuse prédéterminée. Typiquement, la zone de gêne d'une station est toute entière à l'extérieur d'un petit cercle de rayon c et à l'intérieur d'un grand cercle de rayon $R = c\sqrt{13}$, où c désigne la longueur d'un côté d'une cellule hexagonale.

Chacune des voies descendante et montante contient 256 canaux numériques multiplexés temporellement dans une trame ayant une période T = 125 ms, comme montré à la Fig. 2. Dans une trame, un intervalle de temps $IT_0$ à $IT_{255}$ ayant une durée égale à 409,6 µs est assigné à un canal et permet la transmission d'un paquet ayant au plus 2048 bits, ce qui correspond à un débit réel de 5 Mbit/s et à un intervalle élémentaire de 0,2 µs par bit. Un intervalle de garde T = 78,4 µs est disponible à la fin de chaque intervalle $IT_0$ à $IT_{255}$ et correspond à la durée de transmission entre une station fixe et une station mobile, pour une portée maximale R de 23,5 km.

Dans la voie montante, le premier intervalle de temps $IT_0$ de chaque trame n'est pas utilisé. Dans la voie descendante, le premier intervalle $IT_0$ de chaque trame est alloué au canal sémaphore. Les stations fixes des cellules ayant une même position relative dans les motifs, telles que les cellules hachurées ou doublement hachurées dans la Fig. 1, émettent chacune un message dans un même intervalle de temps du canal sémaphore toutes les 125 x 7 = 875 ms. Dans le canal sémaphore, les sept intervalles de temps successifs $IT_0$, repérés $S_1$ à $S_7$ dans la Fig. 2, sont respectivement assignés, dans chaque motif, aux sept cellules du motif. Par exemple, les stations fixes des cellules hachurées des motifs dans la Fig. 1 émettent simultanément dans le canal sémaphore $S_1$. Sachant que la zone de gêne $Z_M$ d'une station mobile est incluse dans un grand cercle de rayon R = $c\sqrt{13}$, toute station mobile telle que la station $M_1$ rattachée à une station fixe $F_1$ d'un motif ne peut être perturbée par toute autre station fixe dans une cellule, telle que la station $F'_1$, ayant la même position relative dans un motif voisin.

Chaque paquet dans l'un des intervalles de temps $S_1$ à $S_7$ du canal sémaphore contient des mots de synchronisation tels que trois octets identiques pour toutes les stations fixes. Dans chaque station mobile, un circuit de récupération de rythme reconstitue des signaux d'horloge à la fréquence de bits à 5 MHz et à la fréquence de trame à 8 Hz à partir des mots de synchronisation. Les stations mobiles sont synchronisées sur les stations fixes et sont ainsi esclaves des stations fixes dites maîtres.

Compte tenu de la large bande utilisée selon le procédé AMRT, il s'introduit, du fait des trajets multiples de propagation, des interférences inter-symboles. Un égaliseur autoadaptatif utilisant les mots de synchronisation est donc nécessaire. L'égaliseur contient au moins un filtre transversal autoadaptatif dont les coefficients de pondération sont calculés en fonction d'un algorithme de corrélation entre les mots de synchronisation reçus et les mots de synchronisation qui ont été préalablement mémorisés et qui sont identiques à ceux émis par les stations fixes. En outre, selon l'invention, un détecteur de niveau dans la station mobile compare les niveaux des sept intervalles de temps $S_1$ à $S_7$ du canal sémaphore afin de sélectionner la station fixe correspondant à la puissance de réception la plus élevée.

Chaque paquet émis par une station fixe dans le canal sémaphore contient également au moins les informations suivantes :
— la liste de marquage de paires de canaux de communication occupés par des stations mobiles se trouvant dans la zone $Z_F$ de la station fixe afin qu'une station mobile désirant communiquer avec la station fixe puisse sélectionner une paire de canaux libres ;
— éventuellement, l'adresse d'une station mobile demandée rattachée à la cellule de la station fixe ;
— un mot d'adresse de la station fixe.

La liste de marquage est continuellement mise à jour dans des mémoires de la station fixe. Elle est déterminée localement par la station fixe comme déjà dit.

Les intervalles $IT_1$ à $IT_{255}$ des trames des voies montante et descendante sont occupés par des canaux multiplexés dans le temps assignés à la transmission de communications telles que phonie ou données. Chaque communication entre une station fixe et une station mobile occupe un intervalle de temps dans la voie montante et un intervalle de temps dans la voie descendante ayant le même rang 1 à 255 dans les trames. La trame de la voie montante est décalée par rapport à la trame de la voie descendante d'une durée égale à environ la moitié de la période de trame, soit 1/16 s. Ce décalage temporel accorde à chaque station, fixe ou mobile, un délai maximal pour passer de l'état émission à l'état réception ou inversement.

Chaque paquet de 2048 bits dans un intervalle $IT_1$ à $IT_{255}$ de canal de communication comprend un en-tête ayant typiquement 48 bits et un champ d'information ayant 2 000 bits.

Les 24 premiers bits de l'en-tête sont des bits de synchronisation qui permettent de récupérer les signaux d'horloge à la fréquence des bits et à la fréquence des trames et d'égaliser le paquet reçu, comme cela a déjà été précisé ci-dessus pour les bits de synchronisation du canal sémaphore. Les 24 autres bits de l'en-tête servent à identifier l'adresse du destinataire, et le cas échéant, à indiquer une demande de changement de canal de la part de la station fixe ou à indiquer un changement de canal ou de station fixe de la part de la station mobile. Puisque la recherche de canal libre ou de station fixe est décidée par la station mobile, l'en-tête du canal de la voie montante comprend également, comme déjà dit, l'adresse de la nouvelle station fixe sélectionnée par la station mobile.

Le champ d'information d'un paquet contient les mots de phonie ou de données ou d'un message particulier propres à la communication et correspondant à un canal au débit de 2 000/0,125 = 16 kbit/s. Le champ d'information d'un canal de communication dans la voie montante peut être occupée par un message particulier. Ainsi, ce message particulier peut être un signal de rattachement indiquant à la station fixe qu'elle est sélectionnée par la station mobile comme station de rattachement. D'autre part, le même message est envoyé lorsque l'abonné de la station mobile met en état de fonctionnement son poste mobile.

De la description qui précède, il apparaît qu'une station mobile effectue les opérations principales suivantes préalablement à toute communication :

— sélection en permanence de la station fixe par discrimination entre les niveaux de puissance reçus dans les intervalles de temps $S_1$ à $S_7$ du canal sémaphore ;

— transmission d'un signal de rattachement à la station fixe afin que la station mobile puisse être appelée ;

— mémorisation de l'adresse de la station fixe et de la liste de marquage des canaux occupés dans la zone de gêne de la station fixe sélectionnée ;

— mémorisation des adresses de canaux occupés dans la zone de gêne de la station mobile ;

— sélection d'une paire de canaux libres de communication dont l'adresse n'est donc pas mémorisée dans la station mobile.

Bien que l'invention ait été décrite ci-dessus en référence à un système de radiocommunication à accès multiple à répartition dans le temps, l'invention concerne également un système de radiocommunication à accès multiple à répartition de fréquence (AMRF). Dans le cas d'une transmission du type AMRF, les canaux temporels sont remplacés par des canaux multiplexés en fréquence, chaque canal étant assigné à une fréquence. Les moyens de réception des stations fixes et des stations mobiles sont constitués par des récepteurs à balayage rapide dans les bandes étroites des fréquences assignées respectivement à la voie descendante et à la voie montante. La vitesse d'analyse des niveaux de puissances reçue est la même que pour le système AMRT si le récepteur varie en fréquence par paliers ayant chacun une durée égale à un intervalle de temps de la trame à AMRT.

Selon une autre variante du procédé du type AMRT selon l'invention, plusieurs couples de voies numériques montantes et descendantes peuvent être prévues lorsque le nombre de canaux multiplexés dans le temps dans une voie numérique est inférieur au trafic exigé pour un grand nombre de stations mobiles. Dans ce cas, chaque station fixe comprend plusieurs émetteurs et récepteurs numériques assignés respectivement aux couples de fréquences des voies numériques. Par contre, chaque station mobile n'utilise qu'une seule paire prédéterminée de voies numériques montante et descendante.

Selon une autre variante, plusieurs intervalles de temps peuvent être offerts à une seule liaison, ce qui permet des transmissions de données à des débits multiples de 16 kbit/s.

## Revendications

1. Procédé de radiocommunication bidirectionnelle entre des stations fixes et des stations mobiles utilisant d'une part un ensemble de canaux de communication dont une première partie constituant une voie descendante est affectée pour l'émission de toutes les stations fixes et dont une deuxième partie constituant une voie montante est affectée pour l'émission de toutes les stations mobiles, chaque partie de canaux de communication formée par un des canaux de communication de la voie montante et par un des canaux de communication de la voie descendante étant susceptible de transmettre une communication bidirectionnelle entre l'une quelconque des stations fixes et l'une quelconque des stations mobiles et d'autre part au moins un canal sémaphore qui est multiplexé avec les canaux de communication dans la voie descendante et dans lequel sont ménagés « n » espaces de temps affectés chacun à une station fixe faisant partie d'un groupe de « n » stations fixes pour que chacune des « n » stations puisse émettre un signal indicateur de puissance et pour que chaque station mobile puisse sélectionner une station fixe en comparant le niveau des signaux de puissance transmis dans les « n » espaces de temps, caractérisé en ce que :

a) chaque station fixe détecte les canaux dans la voie montante occupés par des communications entre des stations fixes et des stations mobiles situées dans une première zone de gêne de ladite station fixe pour laquelle le niveau de puissance reçu provenant desdites stations mobiles est supérieur à un premier seuil prédéterminé et mémorise les adresses des canaux détectés,

b) chaque station fixe émet en permanence au moyen du canal sémaphore assigné à la station fixe les adresses des canaux dans la voie montante occupés par des communications de stations mobiles situées dans la première zone de gêne de ladite station fixe,

c) pour établir une communication avec la station fixe sélectionnée, la station mobile détecte les canaux dans la voie descendante occupés par des communications entre des stations mobiles et des stations fixes situées dans une seconde zone de gêne de ladite station mobile pour laquelle le niveau de puissance reçu provenant desdites stations fixes est supérieur à un second seuil prédéterminé, et ladite station mobile mémorise les adresses des canaux détectés et sélectionne une paire de canaux de communication libres dont l'adresse est différente des adresses des canaux occupés détectés par ladite station mobile et des adresses de canaux occupés, transmises au moyen du canal sémaphore assigné à ladite station fixe sélectionnée.

2. Procédé conforme à la revendication 1, caractérisé en ce que les canaux sont multiplexés par répartition de fréquence.

3. Procédé conforme à la revendication 1, caractérisé en ce que les canaux sont multiplexés par répartition dans le temps.

4. Procédé conforme à l'une des revendications 1 à 3, caractérisé en ce que le rapport entre la puissance d'émission d'une station mobile et le premier seuil prédéterminé à la réception d'une station fixe est égal au rapport entre la puissance d'émission d'une station fixe et le second seuil prédéterminé à la réception d'une station mobile.

5. Procédé conforme à l'une quelconque des revendications 1 à 4, caractérisé en ce que lors de la mise en service de la station mobile, la station mobile transmet son adresse à travers un canal libre de la voie montante vers la station fixe sélectionnée afin que ladite station fixe sélectionnée puisse transmettre à tout instant dans l'intervalle de temps du canal sémaphore assigné à la station fixe un signal d'appel à la station mobile.

6. Procédé conforme à l'une quelconque des revendications 1 à 5, caractérisé en ce que, lorsque la station mobile détecte un brouillage dans le canal de la voie descendante assigné à la communication entre la station mobile et ladite station fixe sélectionnée, la station mobile recherche automatiquement une nouvelle paire de canaux libres selon la procédure énoncée en a) à la revendication 1 et transmet dans le canal de la voie montante assigné à ladite communication un signal de changement de paire de canaux.

7. Procédé conforme à l'une quelconque des revendications 1 à 6, caractérisé en ce que, lorsque ladite station fixe sélectionnée détecte un brouillage dans le canal de la voie montante assigné à la communication entre la station mobile et la station fixe sélectionnée, la station fixe sélectionnée transmet dans le canal de la voie descendante assigné à ladite communication un signal de changement de paire de canaux, lequel invite la station mobile à rechercher une nouvelle paire de canaux libres selon la procédure énoncée en a) à la revendication 1 et à transmettre dans le canal de la voie montante assigné à ladite communication l'adresse de la nouvelle paire de canaux libres.

8. Procédé conforme à l'une quelconque des revendications 1 à 7, caractérisé en ce que, suite au déplacement de la station mobile et en réponse à la détection par la station mobile d'un niveau de puissance reçu dans l'un des intervalles de temps du canal sémaphore plus élevé que le niveau de puissance reçu dans l'intervalle de temps du canal sémaphore assigné à ladite station sélectionnée, la station mobile change de station fixe de rattachement en sélectionnant une paire de canaux libres, notamment en fonction des adresses des canaux occupés transmises dans l'intervalle de temps du canal sémaphore correspondant au niveau de puissance reçu plus élevé, selon une procédure analogue à celle énoncée en a) à la revendication 1.

9. Procédé conforme à la revendication 8, caractérisé en ce que le changement de station fixe est signalé par la station mobile en modifiant une partie de l'en-tête du dernier intervalle de temps transmis à la première station fixe, puis en modifiant une partie de l'en-tête du premier intervalle de temps transmis à la nouvelle station fixe.

10. Procédé conforme à l'une quelconque des revendications 1 à 9, selon lequel les stations fixes sont distribuées dans un réseau cellulaire ayant des motifs périodiques comprenant chacun un nombre prédéterminé de cellules incluant chacune centralement une station fixe, caractérisé en ce que des intervalles de temps successifs du canal sémaphore sont alloués périodiquement et respectivement aux cellules dans chaque motif, et chaque intervalle de temps du canal sémaphore est alloué aux stations fixes de cellules ayant la même position relative dans les motifs.

11. Procédé conforme à l'une quelconque des revendications 1 à 10, caractérisé en ce que plusieurs paires de canaux sont offertes à une même communication.

**Claims**

1. A method of two-way radiocommunication between fixed stations and mobile stations using on the one hand a set of communication channels of which a first group, forming a « down » path, is reserved for transmission from all the fixed stations, and of which a second group, forming an « up » path, is reserved for transmission from all the mobile stations, each group of communication channels formed by one of the communication channels of the « up » path and one of the communication channels of the « down » path being capable of handling a two-way communication between any one of the fixed stations and any one of the mobile stations and, additionally, at least one semaphore channel, characterized in that

a) each fixed station detects the channels in the « up » path that are occupied by communications between fixed stations and mobile stations located in a first interference zone of the said fixed station for which the power level received from the said mobile stations exceeds a first predetermined threshold and stores the addresses of the detected channels,

b) each fixed station continuously transmits through the semaphore channel assigned to the fixed station the addresses of the channels in the « up » path occupied by communications from mobile stations located in the first interference zone of the said fixed station,

c) in order to establish a communication with the selected fixed station, the mobile station detects the channels in the « down » path that are occupied by communications between mobile stations and fixed stations located in a second interference zone of the said mobile station for which the power level received from the said fixed stations exceeds a second predetermined threshold, and the said mobile station stores the addresses of the detected channels and selects a pair of free communication channels whose addresses are different from the addresses of the occupied channels detected by the said mobile station and from the addresses of occupied channels transmitted through the semaphore channel assigned to the said selected fixed station.

2. A method as claimed in Claim 1, characterized in that the channels are frequency-division multiplexed.

3. A method as claimed in Claim 1, characterized in that the channels are time-division multiplexed.

4. A method as claimed in any of Claims 1 to 4, characterized in that the ratio between the transmission power of a mobile station and the first predetermined reception threshold of a fixed station is equal to the ratio between the transmission power of a fixed station and the second predetermined reception threshold of a mobile station.

5. A method as claimed in any of Claims 1 to 4, characterized in that the mobile station, upon being put into service, transmits its address along a free channel of the « up » path to the selected fixed station in order that the said selected fixed station may transmit at any given moment in the time interval of the semaphore channel assigned to the fixed station a call signal to the mobile station.

6. A method as claimed in any of Claims 1 to 5, characterized in that when the mobile station detects interference in the channel of the « down » path assigned to communication between the mobile station and the said selected fixed station, the mobile station automatically searches for a new pair of free channels in accordance with the procedure given under a) in Claim 1 and transmits in the channel of the « up » path assigned to the said communication a signal for changing the pair of channels.

7. A method as claimed in any of Claims 1 to 6, characterized in that, when the said selected fixed station detects interference in the channel of the « up » path assigned to the communication between the mobile station and the selected fixed station, the selected fixed station transmits in the channel of the « down » path assigned to the said communication a signal for changing the pair of channels, which « invites » the mobile station to search for a new pair of free channels in accordance with the procedure given under a) of Claim 1 and to transmit in the channel of the « up » path assigned to the said communication the address of the new pair of free channels.

8. A method as claimed in any of Claims 1 to 7, characterized in that, following a movement of the mobile station and in response to the detection by the mobile station of a power level received in any of the time intervals of the semaphore channel higher than the power level received in the time interval of the semaphore channel assigned to the said selected station, the mobile station changes its fixed communication station by selecting a pair of free channels, mainly on the basis of the occupied-channel addresses transmitted in the time interval of the semaphore channel corresponding to the higher power level received, in accordance with a procedure similar to that given under a) of Claim 1.

9. A method as claimed in Claim 8, characterized in that the change of fixed station is signalled by the mobile station by modifying a part of the heading of the last time interval transmitted to the first fixed station, and then modifying a part of the heading of the first time interval transmitted to the new fixed station.

10. A method as claimed in any of Claims 1 to 9, in which the fixed stations are distributed in a cellular network having periodic patterns each comprising a predetermined number of cells each centrally including a fixed station, characterized in that successive time intervals of the semaphore channel are allocated periodically to cells in each pattern, and each time interval of the semaphore channel is allocated to the fixed stations of cells having the same relative position in the patterns.

11. A method as claimed in any of Claims 1 to 10, in which several pairs of channels are offered to the same communication.

**Patentansprüche**

1. Verfahren für eine in beiden Richtungen wirksame Funkverbindung zwischen Feststationen und Mobilstationen, wobei einerseits ein Gefüge aus Kommunikationskanälen verwendet wird, von dem ein erster einen Rückweg bildender Teil für das Senden aller Feststationen benutzt wird und von dem ein zweiter einen Hinweg bildender Teil zum Senden aller Mobilstationen benutzt wird, wobei jeder Teil der Kommunikationskanäle, der durch einen der Kommunikationskanäle des Hinwegs und einen der Kommunikationskanäle des Rückwegs gebildet wird, eine Kommunikation in zwei Richtungen übertragen kann und zwar zwischen jeder beliebigen Feststation und jeder beliebigen Mobilstation und wobei andererseits mindenstens ein Semaphorkanal verwendet wird, der mit den Kommunikationskanälen in dem Rückweg multiplext ist und in dem « n » Zeitschlitze für je eine Feststation vorgesehen sind, die einen Teil von « n » Feststationen bilden, damit jede der « n » Stationen ein Leistungsanzeigesignal senden kann und damit jede Mobilstation dadurch eine Feststation selektieren kann, dass der Pegel der in den « n » Zeitschlitzen gesendeten Leistungssignale verglichen wird, dadurch gekennzeichnet, dass

a) jede Feststation die Kanäle in dem Hinweg detektiert, die durch Kommunikation zwischen Feststationen und Mobilstationen in der ersten Störzone der genannten Feststation belegt sind, für die der empfangene Leistungspegel, der von den genannten Mobilstationen herrührt, höher ist als eine erste vorbestimmte Schwelle und die Adressen der detektierten Kanäle speichert,

b) jede Feststation mittels des der Feststation zugeordneten Semaphorkanals ständig die Adressen derjenigen Kanäle in dem Hinweg sendet, die durch Kommunikationen der Mobilstationen in der ersten Störzone der genannten Feststation belegt sind,

c) zum Durchführen einer Kommunikation mit der selektierten Feststation die Mobilstation diejenigen Kanäle in dem Rückweg detektiert, die durch Kommunikationen zwischen Mobilstationen und Feststationen in einer zweiten Störzone dieser Mobilstation belegt sind, für die der von den Feststationen herrührende empfangene Leistungspegel höher ist als eine zweite vorbestimmte Schwelle und wobei diese Mobilstation die Adressen der detektierten Kanäle speichert und ein freies Kommunikationskanalpaar selektiert, dessen Adresse anders ist als die Adressen der belegten von der betreffenden Mobilstation detektierten Kanäle und anders als die mittels des der genannten selektierten Feststation zugeordneten Semaphorkanals übertragenen Adressen der belegten Kanäle.

2. Verfahren nach Anspruch 1, dadurch gekennzeichnet, dass die Kanäle frequenzmultiplext sind.

3. Verfahren nach Anspruch 1, dadurch gekennzeichnet, dass die Kanäle zeitmultiplext sind.

4. Verfahren nach einem der Ansprüche 1 bis 3, dadurch gekennzeichnet, dass das Verhältnis zwischen der Sendeleistung einer Mobilstation und der ersten vorbestimmten Empfangsschwelle einer Feststation dem Verhältnis zwischen der Sendeleistung einer Feststation und der zweiten vorbestimmten Empfangsschwelle einer Mobilstation entspricht.

5. Verfahren nach einem der Ansprüche 1 bis 4, dadurch gekennzeichnet, dass beim Inbetriebsetzten der Mobilstation diese Station ihre Adresse über einen freien Kanal des Hinweges in Richtung der selektierten Feststation aussendet, damit diese selektierte Feststation sofort in dem Zeitintervall des der Feststation zugeordneten Semaphorkanals ein Rufsignal übertragen kann.

6. Verfahren nach einem der Ansprüche 1 bis 5, dadurch gekennzeichnet, dass wenn die Mobilstation in demjenigen Kanal des Rückweges, der für die Kommunikation zwischen der Mobilstation und der genannten selektierten Feststation gemeint ist, Störungen detektiert, die Mobilstation automatisch ein neues freies Kanalpaar sucht, und zwar nach dem bei a) im Anspruch 1 genannten Verfahren und über den für diese Kommunikation gemeinten Kanal des Hinweges ein Kanalpaarwechselsignal sendet.

7. Verfahren nach einem der Ansprüche 1 bis 6, dadurch gekennzeichnet, dass wenn die genannte Feststation in demjenigen Kanal des Hinweges, der für die Kommunikation zwischen der Mobilstation und der selektierten Feststation gemeint ist, Störungen detektiert, die selektierte Feststation über den Kanal des für die Kommunikation gemeinten Rückweges ein Kanalpaarwechselsignal sendet, das die Mobilstation dazu bewegt, nach dem bei a) im Anspruch 1 genannten Verfahren ein neues freies Kanalpaar zu suchen und über den Kanal des Hinweges, der für die Kommunikation gemeint ist, die Adresse des neuen freien Kanalpaares sendet.

8. Verfahren nach einem der Ansprüche 1 bis 7, dadurch gekennzeichnet, dass nach einem Ortswechsel der Mobilstation und wenn die Mobilstation einen in einem der Zeitintervalle des Semaphorkanals empfangenen Leistungspegel detektiert hat, der höher ist als der in dem Zeitintervall des Semaphorkanals der genannten selektierten Station empfangene Leistungspegel, die Mobilstation nach einem Verfahren entsprechend dem bei a) im Anspruch 1 genannten Verfahren die in Verbindung stehende Feststation wechselt, indem ein freies Kanalpaar selektiert wird, insbesondere in bezug auf die in dem Zeitintervall des Semaphorkanals entsprechend dem empfangenen höheren Leistungspegel gesendeten Adressen der belegten Kanäle.

9. Verfahren nach Anspruch 8, dadurch gekennzeichnet, dass der Wechsel der Feststation in der Weise von der Mobilstation signalisiert wird, dass sie einen Teil des Kopfes des letzten zu der ersten Feststation übertragenen Zeitintervalls ändert, wonach sie einen Teil des Kopfes des ersten zu der neuen Feststation übertragenen Zeitintervalls ändert.

10. Verfahren nach einem der Ansprüche 1 bis 9, nach dem die Feststationen in einem Zellennetzwerk verteilt sind, das eine periodische Konfiguration aufweist mit je einer vorbestimmten Anzahl Zellen, die je zentral eine Feststation aufweisen, dadurch gekennzeichnet, dass aufeinanderfolgende Zeitintervalle des Semaphorkanals periodisch und jeweils Zellen in jeder Konfiguration zugeordnet werden und dass jedes Zeitintervall des Semaphorkanals Feststationen mit derselben relativen Lage in den Konfigurationen zugeordnet wird.

11. Verfahren nach einem der Ansprüche 1 bis 10, dadurch gekennzeichnet, dass für ein und dieselbe Kommunikation mehrere Kanalpaare verfügbar sind.

FIG.1

FIG.2